(19) Europäisches Patentamt
European Patent Office
Office européen des brevets

(11) **EP 1 910 154 B1**

(12) **FASCICULE DE BREVET EUROPEEN**

(45) Date de publication et mention
de la délivrance du brevet:
**03.12.2008 Bulletin 2008/49**

(21) Numéro de dépôt: **06779035.2**

(22) Date de dépôt: **10.07.2006**

(51) Int Cl.:
***B62D 15/02*** *(2006.01)*

(86) Numéro de dépôt international:
**PCT/FR2006/050696**

(87) Numéro de publication internationale:
**WO 2007/015020 (08.02.2007 Gazette 2007/06)**

(54) **PROCEDE D'AIDE AU PARCAGE EN TEMPS REEL POUR VEHICULE AUTOMOBILE ET DISPOSITIF CORRESPONDANT**

VERFAHREN ZUR ECHTZEITPARKHILFE FÜR EIN KRAFTFAHRZEUG UND ENTSPRECHENDE VORRICHTUNG

METHOD FOR REAL-TIME PARKING ASSISTANCE FOR A MOTOR VEHICLE, AND CORRESPONDING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.08.2005 FR 0508219**

(43) Date de publication de la demande:
**16.04.2008 Bulletin 2008/16**

(73) Titulaire: **Renault SAS**
**92100 Boulogne Billancourt (FR)**

(72) Inventeur: **AYMA, Vincent**
**F-75015 Paris (FR)**

(56) Documents cités:
**EP-A- 1 361 458**

## Description

La présente invention concerne, d'une manière générale, l'aide au parcage pour les véhicules automobiles, en particulier le parcage grâce à des systèmes de parcage automatique.

L'invention s'applique avantageusement pour le parcage dans une place de type créneau, mais peut être utilisé pour tout type de parcage notamment dans des places de type « rangement en bataille », ou en épi.

Actuellement, l'approche des méthodes d'aide au parcage consiste à mener le véhicule sur une position décidée par le conducteur et non sur une position optimale au vu de la place disponible par exemple, ou encore de la position initiale du véhicule.

En outre, les systèmes actuels d'aide au parcage ne permettent pas d'avoir une consigne continue d'angle volant durant la manoeuvre.

En effet, ces systèmes donnent une première consigne jusqu'à une position intermédiaire où le véhicule marque un temps d'arrêt et une deuxième consigne de cette position intermédiaire jusqu'à la position finale.

Par exemple, la demande de brevet EP 1 170 171 (TOYOTA) présente une méthode de parcage où est déterminée dans une première phase, une trajectoire circulaire du centre de l'essieu arrière. Cette rotation est réalisée avec une consigne maximale de braquage du volant. Puis, le contre-braquage est réalisé lorsque le centre de l'essieu arrière atteint un point du cercle de rotation lui-même tangent en ce point à un autre cercle de braquage. La fin de la manoeuvre est effectuée à braquage maximal.

La demande de brevet FR 2 785 383 (RENAULT) présente une méthode où la trajectoire de parcage est déterminée de la façon suivante : une première phase où le véhicule recule en ligne droite parallèlement à la file de stationnement ; une deuxième phase où le véhicule recule en ayant les roues braquées au maximum à droite, une troisième phase où le véhicule recule en ligne droite, et enfin une dernière phase où le véhicule recule, les roues étant braquées à gauche au maximum.

La demande de brevet US 2001/003 0688 décrit une méthode de parcage où l'on fournit les équations permettant de calculer les trajectoires d'un véhicule lors d'une phase de parcage en créneau à braquage maximal pour la phase d'engagement du parcage. Puis, le contre-braquage est réalisé dans une position donnée P0 et à l'arrêt puisque les phases de braquage et de contre-braquage sont effectuées chacune avec un angle maximal. La phase de recul suivante permet au véhicule de se garer. Cette phase est réalisée en braquant au maximum les roues du véhicule.

La demande de brevet française FR 2 630 075 (Industrial Technology Research Institute) porte sur un dispositif apte à donner une trajectoire commençant directement avec un angle de braquage maximal. Un contre-braquage est réalisé à l'arrêt, étant donné qu'il faut passer d'un braquage maximal d'un côté à un braquage maximal de l'autre côté.

En outre, la demande de brevet EP 1 361 458 (VALEO) présente une méthode et un dispositif de parcage selon les préambules des revendications indépendantes 1 et 6.

Dans ces demandes de brevets, les méthodes de parcage reposent sur des consignes de braquage maximales, sans valeur intermédiaire, nécessitant donc de réaliser la manoeuvre de contre-braquage à l'arrêt, ce qui va à l'encontre du comportement naturel du conducteur.

L'invention vise à apporter une solution à ces problèmes.

L'invention a pour objet d'améliorer les consignes de braquage générées pour l'aide au parcage, de façon à pouvoir bénéficier d'une consigne évolutive au cours de la manoeuvre.

L'invention a encore pour objet de permettre le parcage d'un véhicule automobile de façon optimale au vu de la place disponible ou encore de la position en cours du véhicule automobile.

A cet effet, l'invention propose un procédé d'aide au parcage en temps réel pour véhicule automobile à partir d'une position initiale du véhicule et dans une place, comprenant une étape préliminaire de reconnaissance de la place et des obstacles environnants.

Selon une caractéristique générale de l'invention, le procédé comprend l'élaboration d'une consigne continue d'angle volant délivrée au conducteur, ladite consigne permettant le suivi d'une trajectoire optimale de parcage par le véhicule, la détermination de ladite trajectoire optimale comprenant la détermination d'un point d'intersection d'un premier et d'un deuxième lieux géométriques du centre de rotation du véhicule, le premier lieu géométrique décrivant la position dudit centre de rotation pour l'ensemble des positions possibles de l'arrière du véhicule impliquant le contact des deux coins arrière du véhicule avec les obstacles délimitant le côté et/ou l'arrière de ladite place, le deuxième lieu géométrique décrivant la position dudit centre de rotation pour l'ensemble des positions possibles du véhicule de manière que l'un des coins avant soit en contact avec le coin opposé de l'obstacle délimitant l'avant de ladite place.

Ainsi, on détermine la position optimale de l'arrière du véhicule en fonction de ladite position initiale du véhicule, la position optimale de l'arrière du véhicule étant obtenue lorsque le centre de rotation du véhicule passe par ledit point d'intersection puis que le véhicule recule en suivant une consigne de braquage maximale.

En d'autres termes, l'on souhaite placer le véhicule de telle façon que les deux coins arrière touchent respectivement l'obstacle limitant la place en longueur et par exemple le trottoir délimitant le côté de la place. Cette position des deux coins arrière, dite position de « double contact », correspond à une position optimale du véhicule automobile garé, puisqu'une fois cette position atteinte, celui-ci est soit garé, soit dans une position permettant d'atteindre une position de parcage optimale à laquelle il parvient en avançant avec les roues braquées au maximum.

La trajectoire ainsi obtenue a pour avantage d'aboutir à une position finale optimale quant à la place disponible, et est en outre beaucoup plus fluide que les trajectoires proposées par les solutions antérieures. Elle correspond ainsi beaucoup plus à une trajectoire naturelle que les trajectoires proposés avec un contre-braquage réalisé à l'arrêt.

De préférence, la détermination de la trajectoire optimale comprend en outre :

- une étape de simulation de la trajectoire du véhicule pour sortir de ladite place à partir de ladite position arrière optimale jusqu'à la position initiale, l'étape de simulation comprenant deux sous-étapes, telles que pour chacune d'entre elles, le véhicule ait une orientation de braquage opposée, la première sous-étape comprenant la simulation d'un premier déplacement du véhicule de la position arrière optimale jusqu'à une position intermédiaire lorsque le véhicule est à une distance donnée de l'obstacle situé à l'avant de ladite place, et la deuxième sous-étape comprenant la simulation d'un deuxième déplacement du véhicule de ladite position intermédiaire jusqu'à la position initiale dudit véhicule, l'angle de lacet de véhicule associé à un repère fixe s'annulant progressivement,
- une étape où on calcule la trajectoire optimale de parcage en inversant la trajectoire simulée.

Autrement dit, le problème est analysé en partant de la position finale souhaitée et en remontant jusqu'à la position initiale du véhicule. En outre, l'annulation progressive de l'angle de lacet permet d'avoir une évolution continue de l'angle, contrairement aux méthodes existantes qui nécessitent la réalisation d'un contre-braquage à l'arrêt.

Selon un mode de mise en oeuvre, la deuxième sous-étape comprend en outre une étape d'optimisation de la trajectoire entre la position intermédiaire et la position initiale, où on génère des séries de valeurs d'angle volant pour permettre le suivi de la trajectoire optimale, et où on sélectionne la série de valeurs optimale permettant d'obtenir une trajectoire de parcage similaire, à une erreur près, à la trajectoire optimale.

Selon un mode de mise en oeuvre, la trajectoire du véhicule est obtenue à partir de l'angle volant, à l'aide d'une variable donnée.

Cette variable peut être par exemple la distance $\|\Delta x\| + \|\Delta y\| + \|\Delta \theta\|$, où x et y sont respectivement l'abscisse et l'ordonnée du centre de la voiture, et $\theta$ l'angle de lacet du véhicule automobile dans un repère orthonormal ayant pour centre, le centre de l'essieu arrière dudit véhicule, l'angle de lacet étant fonction de l'angle volant.

Selon un autre aspect de l'invention, il est proposé un dispositif d'aide au parcage en temps réel pour véhicule automobile à partir d'une position initiale du véhicule et dans une place, comprenant un ensemble de capteurs aptes à mesurer et évaluer ladite place et les obstacles environnants.

Selon une caractéristique générale de cet autre aspect de l'invention, le dispositif comprend un moyen d'élaboration apte à élaborer une consigne continue d'angle volant à délivrer au conducteur, ladite consigne permettant le suivi d'une trajectoire optimale de parcage par le véhicule, des premiers moyens de détermination de ladite trajectoire optimale aptes à déterminer un premier et un deuxième lieu géométrique du centre de rotation du véhicule, le premier lieu géométrique décrivant la position dudit centre de rotation pour l'ensemble des positions possibles de l'arrière du véhicule impliquant le contact des deux coins arrière du véhicule avec les obstacles délimitant le côté et/ou l'arrière de ladite place, le deuxième lieu géométrique décrivant la position dudit centre de rotation pour l'ensemble des positions possibles du véhicule, de manière que l'un des coins avant soit en contact avec le coin opposé de l'obstacle délimitant l'avant de ladite place, et des deuxième moyens de détermination aptes à déterminer le point d'intersection du premier et du deuxième lieux géométriques de façon à obtenir la position arrière optimale en fonction de ladite position initiale du véhicule.

Selon un mode de réalisation, le moyen d'élaboration de la consigne peut comprendre en outre :

- un moyen de simulation de la trajectoire du véhicule pour sortir de ladite place à partir de ladite position arrière optimale jusqu'à la position initiale, ledit moyen de simulation comprenant deux sous-moyens, le premier sous-moyen étant apte à simuler un premier déplacement du véhicule de la position arrière optimale en braquant le volant avec une première orientation jusqu'à une position intermédiaire lorsque le véhicule est à une distance donnée de l'obstacle situé à l'avant de ladite place, et le deuxième sous-moyen étant apte à simuler un deuxième déplacement du véhicule de ladite position intermédiaire jusqu'à la position initiale, tel que l'angle de lacet, associé à un repère fixe, s'annule progressivement,
- un moyen d'inversion apte à déterminer la trajectoire optimale de parcage en inversant la trajectoire simulée.

Selon un mode de réalisation, le deuxième sous-moyen peut comprendre un moyen d'optimisation de la trajectoire du deuxième déplacement, apte à générer des séries de valeurs d'angle volant pour permettre le suivi de la trajectoire optimale, et un moyen de sélection apte à sélectionner la série de valeurs optimale permettant d'obtenir une trajectoire de parcage similaire, à une erreur près, à la trajectoire optimale.

Selon un mode de réalisation, la trajectoire du véhicule est obtenue de préférence à partir de l'angle volant à l'aide d'une variable donnée.

De préférence, ladite variable est la distance $|\Delta| + |\Delta| + |\Delta\theta|$, où x et y sont respectivement l'abscisse et l'ordonnée du centre de la voiture, et θ l'angle de lacet du véhicule automobile dans un repère orthonormal ayant pour centre, le centre de l'essieu arrière dudit véhicule, l'angle de lacet étant fonction de l'angle volant.

Le dispositif tel que décrit précédemment peut être utilisé au sein d'un système d'aide au parcage d'un véhicule automobile.

D'autres avantages et caractéristiques de l'invention apparaîtront à l'examen de la description détaillée d'un mode de réalisation de l'invention, nullement limitatif, et des dessins annexés, sur lesquels :

- la figure 1 illustre schématiquement un véhicule automobile dans un repère, comprenant un dispositif selon l'invention ;
- la figure 2 représente un véhicule automobile et le rayon de braquage associé ;
- la figure 3 illustre un mode de mise en oeuvre du procédé selon l'invention ;
- la figure 4 illustre un exemple d'un premier lieu géométrique au sens de l'invention ;
- la figure 5 illustre un exemple d'un second lieu géométrique au sens de l'invention ;
- la figure 6 illustre plus en détail une étape du procédé représenté sur la figure 3,
- la figure 7 illustre une position intermédiaire du véhicule automobile lors de la détermination de la trajectoire optimale de parcage selon l'invention ;
- la figure 8 illustre plus en détail l'étape du procédé représenté sur la figure 6,
- la figure 9 illustre un exemple de calcul de consigne d'angle de braquage en fonction de la trajectoire déterminée ;
- la figure 10 illustre un mode de réalisation d'un dispositif d'aide au parcage selon l'invention.

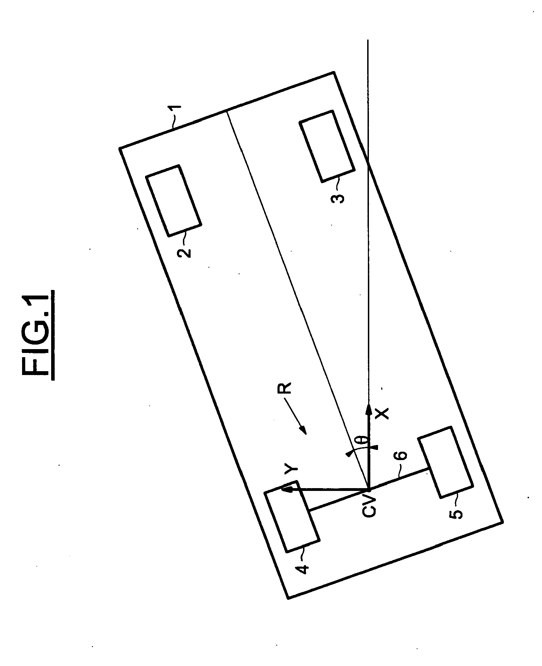

Sur la figure 1, on a représenté très schématiquement un véhicule automobile 1 par un rectangle. Le véhicule automobile 1 comprend deux roues directrices avant 2 et 3 et deux roues arrière 4 et 5 disposées sur un même axe géométrique 6.

Le centre du véhicule CV est considéré comme le milieu du segment relié les deux roues arrière 4 et 5, c'est-à-dire le centre de l'axe 6.

Dans cet exemple, il est supposé que le mouvement du véhicule 1 est effectué dans un plan et donc l'altitude du centre CV n'est pas prise en compte.

La position du véhicule dans un repère fixe R est connue grâce aux coordonnées du centre de la voiture (x, y, θ) représentant respectivement l'abscisse du centre CV, son ordonnée et l'angle de lacet du véhicule 1.

Dans cet exemple, l'ensemble des facteurs liés à l'adhérence des roues sur la route est vu comme négligeable.

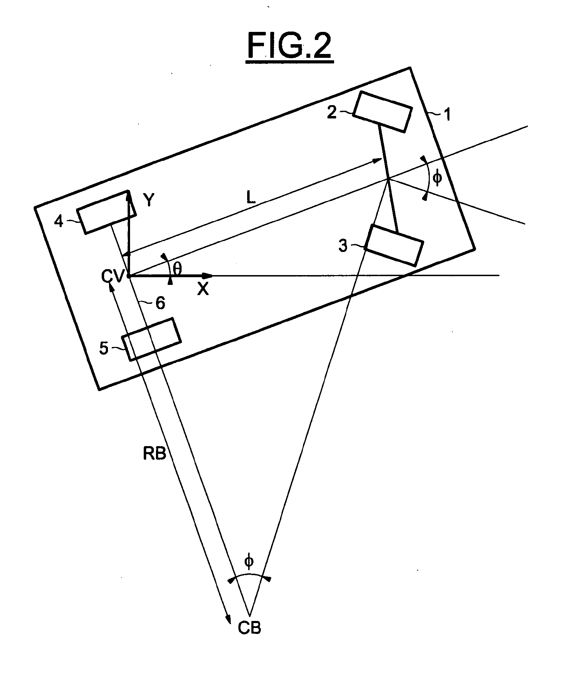

Sur la figure 2, est représenté le véhicule automobile 1 dans une situation de braquage, d'un angle de braquage φ. La trajectoire du braquage possède un rayon de courbure avec un rayon de braquage RB et un centre de braquage CB. L'angle formé par les segments reliant le centre de braquage CB et le centre du véhicule CV, et le centre de braquage CB et le centre de l'essieu avant 7, est l'angle de braquage φ.

A partir de cette situation, les équations de la cinématique qui permettent de modéliser le comportement du véhicule 1 lorsque la vitesse v et l'angle de braquage φ sont connus, sont :

$$\partial x / \partial t = v.\cos(\theta)$$

$$\partial y / \partial t = v.\sin(\theta)$$

$$\partial \theta / \partial t = \frac{v}{L}.\tan(\phi)$$

où L est l'empattement du véhicule, c'est-à-dire la distance entre l'essieu arrière et l'essieu avant.

En outre, comme on peut le voir sur la figure 2, il est possible de relier l'angle de braquage φ des roues au rayon RB de braquage du véhicule 1. Ainsi, il vient :

$$\tan(\Phi) = \frac{L}{R}.$$

Cette relation permet de visualiser géométriquement comment se comporte le véhicule 1 à vitesse constante et faible lors d'une phase de braquage : il tourne autour du centre de braquage CB.

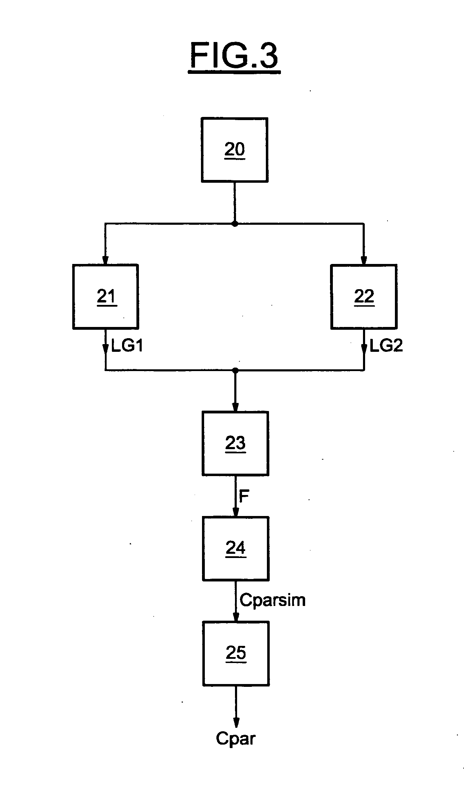

On se réfère à présent à la figure 3, qui illustre un exemple de mise en oeuvre du procédé de parcage selon l'invention.

Cet exemple illustre le cas d'un parcage en créneau à gauche, mais bien évidemment il est également valable pour un parcage en créneau à droite. Pour cela, il suffit d'inverser l'orientation des angles mis en jeu.

Tout d'abord, une première étape 20 consiste à déterminer les obstacles environnant le véhicule. Cette étape permet la reconstitution de l'environnement proche du véhicule, en particulier la place de créneau lorsque le véhicule est placé le long de cette place libre. A l'issu de l'étape 20, on récupère un ensemble de données concernant les obstacles proches du véhicule automobile.

A partir de ces données obstacles, on élabore deux lieux géométriques LG1 et LG2 lors de deux étapes 21 et 22.

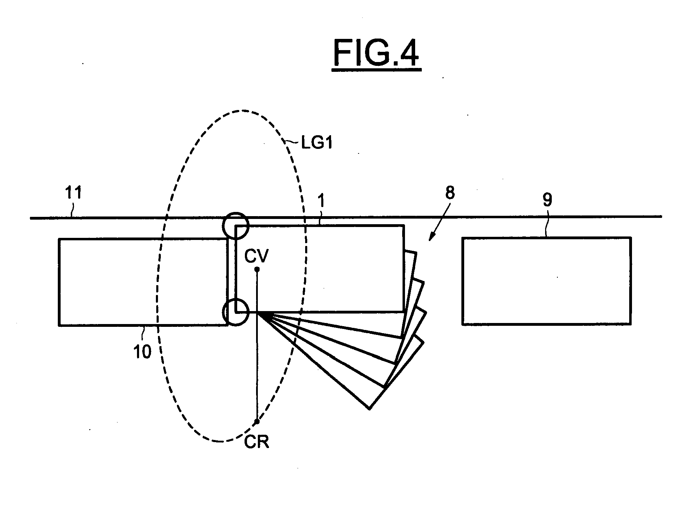

Le premier lieu géométrique LG1 est illustré sur la figure 4 qui représente le véhicule automobile 1 dans une place 8, cette place étant définie à l'avant par un véhicule 9 et à l'arrière par un véhicule 10. En outre, le côté de la place 8 est délimité par un trottoir 11.

Le premier lieu géométrique LG1 est l'ensemble des points parcourus par le centre de rotation CR. Celui-ci correspond au centre de braquage lorsque l'angle de braquage est maximal, et lorsque les deux coins arrière du véhicule 1, identifiés sur la figure 4 à l'aide deux cercles, sont en contact avec les obstacles délimitant la place à l'arrière et sur le côté du véhicule 1.

Cette position, dite position de « double contact », correspond à la réalisation d'une manoeuvre de parcage optimale. Par conséquent, le but de la trajectoire va être de placer le véhicule de façon que les deux coins arrière du véhicule automobile touchent respectivement l'obstacle limitant la place en longueur et le trottoir. Le véhicule se trouve dans une position dite de « double-contact ».

Le lieu géométrique LG1 ainsi obtenu est une ellipse.

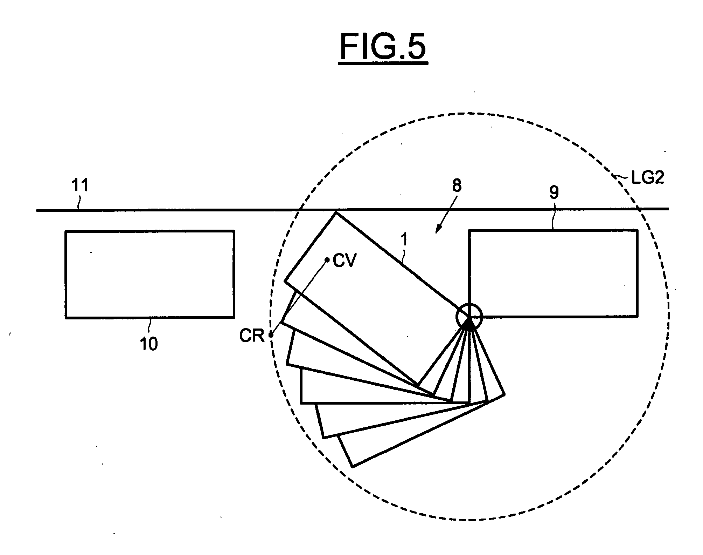

Lors de l'étape 22 (figure 3), on détermine le deuxième lieu géométrique LG2 représenté sur la figure 5.

Le lieu géométrique LG2 représente le tracé du mouvement effectué par le centre de rotation CR qui, comme défini ci-dessus, représente le centre de braquage lorsque l'angle de braquage est maximal, tel que le coin avant gauche du véhicule 1 soit en contact avec le coin arrière droit du véhicule 9 limitant la place 8 par l'avant. Le lieu géométrique LG2 aboutit à un cercle.

Ce cercle décrit l'ensemble des positions du centre de rotation CR, tel que le véhicule puisse entrer le coin avant gauche dans la place 8 en reculant avec un angle de braquage maximal, sans heurter l'obstacle avant.

On se réfère à nouveau à la figure 3. A l'issue des étapes 21 et 22, on détermine au cours d'une étape 23 le point d'intersection des deux lieux géométriques LG1 et LG2. Le point d'intersection F est bien évidemment le point d'intersection qui se situe du côté de la manoeuvre et non sur le trottoir.

Le point F représente une position clé pour la trajectoire du véhicule. En effet, lors de sa manoeuvre de parcage, une fois que le véhicule automobile a atteint cette position, le recul avec un angle de braquage maximal permet de passer au plus près de l'obstacle délimitant la place à l'avant, ici le véhicule 9, et permet d'aboutir à une situation où le véhicule est en contact avec le véhicule arrière 10 et le trottoir 11, dans la position de double contact.

Ainsi, une fois le point F déterminé, on simule au cours d'une étape 24 la sortie du véhicule à partir de la position de double contact correspondant à la position du véhicule lorsque le centre de rotation correspond au point F. On obtient alors une consigne de parcage pour une trajectoire simulée Cparsim.

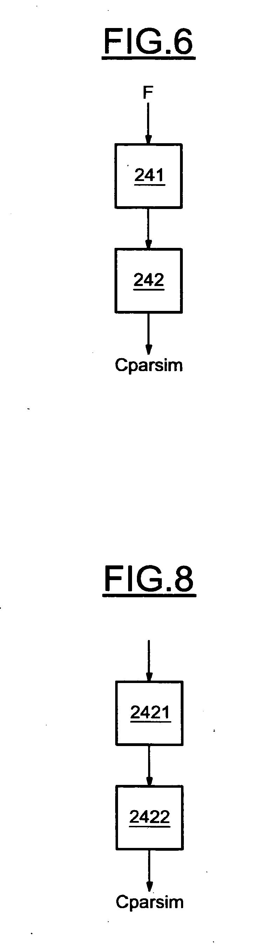

On se réfère à présent à la figure 6. Lors de la simulation de la trajectoire de sortie du véhicule, au cours d'une étape 241, le véhicule effectue un premier déplacement, où il avance avec un angle de braquage maximal de la position de double contact optimale jusqu'à une position intermédiaire.

Le véhicule a alors certain angle de lacet, par exemple 40°, et une distance choisie, par exemple de 60 cm sépare le coin avant gauche du véhicule 1 du coin arrière droit du véhicule obstacle avant 9. Cette distance peut prendre toute autre valeur, selon les contraintes désirées.

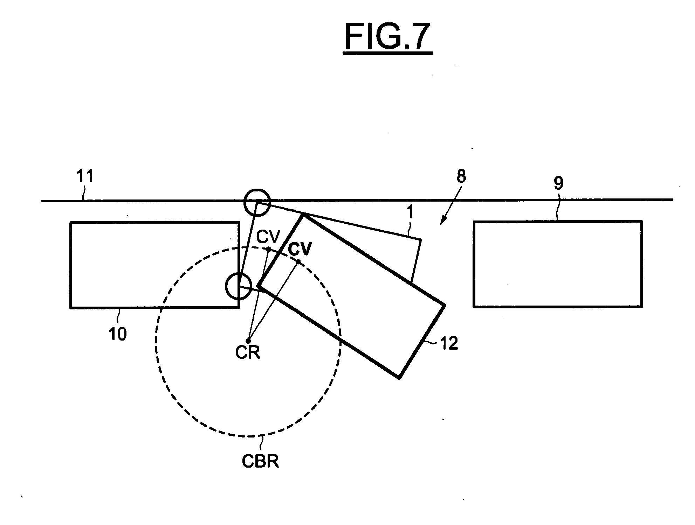

La position intermédiaire 12 est représentée par exemple sur la figure 7. Dans cet exemple, le véhicule 1 quitte la position de double contact repérée sur la figure 6 par les deux cercles au niveau de ses coins arrière, selon un cercle de braquage CBR et un centre de braquage CR pour un angle de braquage maximal.

On se réfère à nouveau à la figure 6. A partir de la position intermédiaire, l'élaboration de la trajectoire optimale est poursuivie en calculant un deuxième déplacement de la position intermédiaire à la position initiale, étape 242.

On calcule alors (figure 8) une série de valeurs d'angle de braquage (lié à l'angle de lacet) de façon que l'angle de lacet qui a ici une valeur de 40°, s'annule progressivement, étape 2421.

Cette série de valeurs est ensuite optimisée, étape 2422, pour que la consigne de braquage correspondante permette le suivi, à une erreur près, de la trajectoire optimale déterminée.

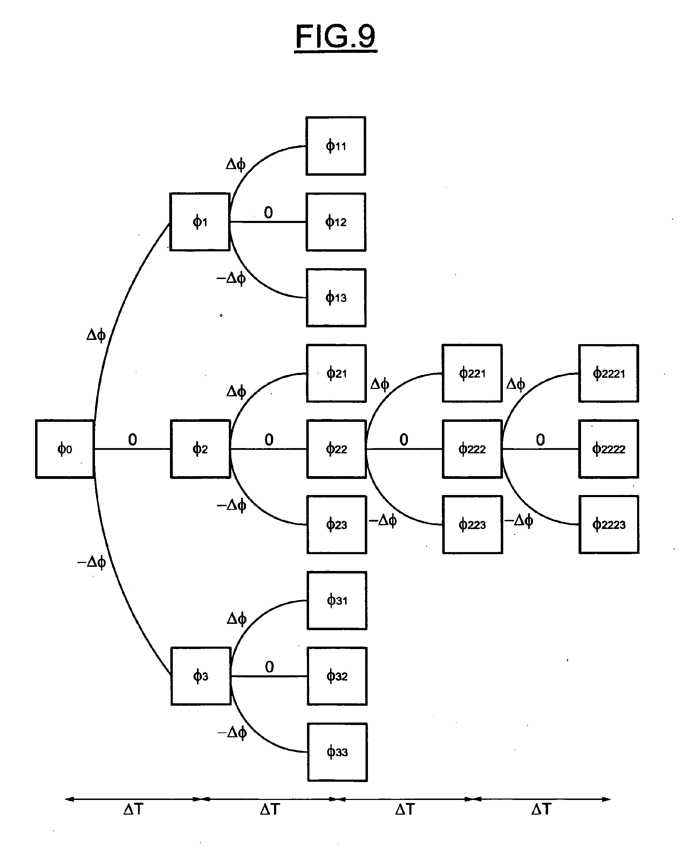

La figure 9 illustre un exemple de méthode d'optimisation.

Ainsi, avec un pas temporel $\Delta T$, on génère des consignes d'angle de braquage nulle ou d'amplitude $\pm\Delta\phi$, de façon à aboutir petit à petit à un angle de lacet nul.

La variation d'angle $\pm\Delta\phi$ est calculée de manière à avoir une amplitude suffisamment faible par rapport au pas temporel $\Delta T$, dans l'optique d'avoir une consigne d'angle de braquage continue.

Cette série de valeurs d'angle de braquage est associée à la trajectoire du véhicule à l'aide d'une variable permettant de calculer cette trajectoire à partir de l'angle de lacet dépendant de l'angle volant et donc de l'angle de braquage comme expliqué ci-avant. Cette variable peut être par exemple la distance :

$$\|\Delta x\| + \|\Delta y\| + \|\Delta\theta\|,$$

où x et y sont respectivement l'abscisse et l'ordonnée du centre de la voiture, et $\theta$ l'angle de lacet du véhicule automobile dans un repère orthonormal ayant pour centre, le centre de l'essieu arrière dudit véhicule.

Bien sûr cette variable dépend du repère choisi et des hypothèses de départ. L'homme du métier saura adapter celles-ci.

Ainsi, il est aisé de sélectionner la série de variation d'angle de braquage permettant le suivi de la trajectoire optimale (figure 6, étape 242).

La consigne d'angle volant Cparsim est alors délivrée : elle permet le suivi d'une trajectoire optimale simulée pour sortir de la place.

Bien entendu, l'élaboration de la consigne d'angle de braquage respecte les contraintes du véhicule, par exemple la saturation de l'angle de braquage des roues entre certaines valeurs.

Le fait d'avoir une variation progressive de l'angle de lacet θ permet d'avoir une trajectoire fluide, contrairement aux solutions antérieures qui demandent d'effectuer un contre-braquage à l'arrêt.

On se réfère à nouveau à la figure 3. Une fois l'optimisation réalisée, on génère au cours d'une étape 25, la consigne de parcage Cpar en inversant la trajectoire de sortie de la place 8 simulée Cparsim.

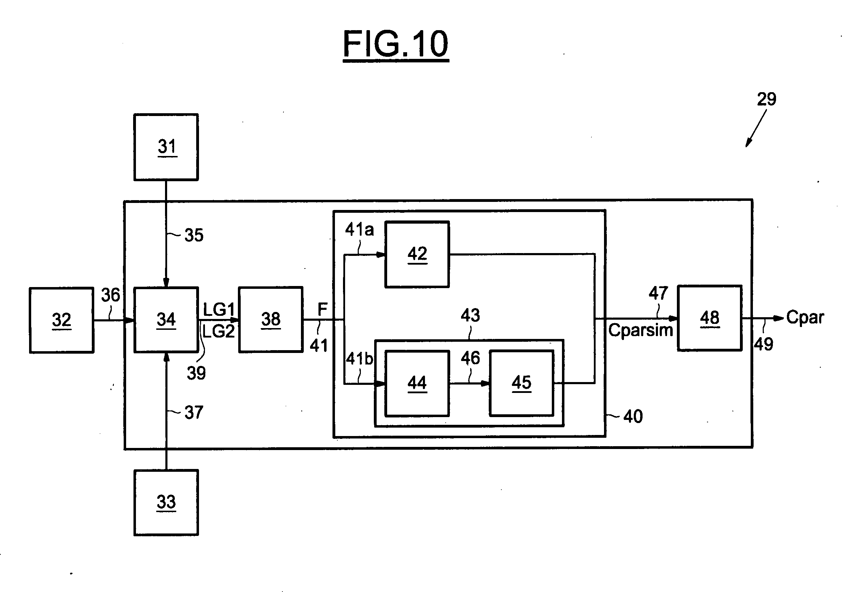

Sur la figure 10, on a représenté un mode de réalisation d'un dispositif 30 pouvant mettre en oeuvre le procédé illustré sur la figure 3. Ce dispositif 30 peut être par exemple intégré dans un système d'aide au parcage 29.

Le dispositif 30 est connecté à différents capteurs, 31, 32, 33, aptes à détecter les obstacles faisant partie de l'environnement du véhicule automobile. Ces capteurs peuvent être par exemple des caméras, des radars, ou encore un radar de type LIDAR (« LIght Detection And Ranging », en langue anglaise).

Ces différents capteurs, 31, 32 et 33 sont connectés au dispositif 30, respectivement par l'intermédiaire de connexions 35, 36 et 37.

Les données issues des capteurs 31, 32, 33 sont délivrées à un premier moyen de détermination 34 situé dans le dispositif 30.

Le premier moyen de détermination 34 élabore les lieux géométriques LG1 et LG2, à partir des différentes mesures délivrées par les capteurs.

Les données représentatives des lieux géométriques LG1 et LG2 sont délivrées à un deuxième moyen de détermination 38 par l'intermédiaire d'une connexion 39. Ce deuxième moyen 38 permet de déterminer le point d'intersection du premier et du deuxième lieux géométriques LG1 et LG2. Ce point d'intersection F est délivré à un moyen de simulation 40 par l'intermédiaire d'une connexion 41.

Le moyen de simulation 40 comprend un premier sous-moyen 42, recevant en entrée le point d'intersection F par une connexion 41a. Ce premier sous-moyen 42 élabore une consigne pour effectuer le premier déplacement de la position de double-contact à la position intermédiaire.

Le moyen de simulation 40 comprend également un deuxième sous-moyen 43, recevant en entrée le point d'intersection F par une connexion 41b.

Ce deuxième sous-moyen 43 comprend un premier bloc 44 apte à générer et à optimiser une série de valeurs d'angle de braquage de la position intermédiaire jusqu'à la position initiale, pour que l'angle de lacet θ s'annule progressivement.

Le deuxième sous-moyen 43 comprend en outre un deuxième bloc 45 connecté au bloc 44 par une connexion 46, qui a pour fonction de sélectionner la série de valeur d'angle de braquage pour élaborer une consigne de parcage permettant le meilleur suivi de la trajectoire optimale de parcage.

Le bloc 40 délivre alors la consigne de parcage simulée Cparsim correspondant à l'inverse de la consigne de parcage réelle Cpar.

Le bloc 40 est connecté par l'intermédiaire d'une connexion 47 à un bloc d'inversion 48, qui élabore la consigne de parcage réelle Cpar en inversant la consigne de parcage simulée Cparsim. Celle-ci est délivrée par la connexion 49.

Cette consigne Cpar peut être transmise au conducteur à l'aide par exemple de vibrations émises dans le volant, d'un signal sonore ou encore d'images sur un écran de navigation intégré dans le véhicule.

Le dispositif d'aide au parcage peut être utilisé dans des systèmes d'aide au parcage, embarqués à bord d'un véhicule automobile. Ainsi, il peut être utilisé pour recaler un véhicule automobile sur une trajectoire optimale en temps réel, grâce par exemple à un système d'aide à la manoeuvre donnant des indications de braquage au conducteur.

Il est alors possible, à l'aide d'un dispositif selon l'invention, de réaliser des manoeuvres de parcage dans des places de parkings particulièrement petites.

L'invention est par ailleurs particulièrement avantageuse pour les véhicules automobiles de type fourgonnette ou petit camion, ayant peu de visibilité pour se garer.

**Revendications**

**1.** Procédé d'aide au parcage en temps réel pour véhicule automobile à partir d'une position initiale du véhicule et dans une place, comprenant une étape préliminaire (20) de reconnaissance de la place et des obstacles environnants, où le procédé comprend l'élaboration d'une consigne (Cpar) continue d'angle volant délivrée au conducteur, ladite consigne permettant le suivi d'une trajectoire optimale de parcage par le véhicule, **caractérisé par le fait que** la détermination de ladite trajectoire optimale comprend la détermination d'un point d'intersection (F) d'un premier (LG1) et d'un deuxième lieux (LG2) géométriques du centre de rotation du véhicule, le premier lieu (LG1) géométrique décrivant la position dudit centre de rotation pour l'ensemble des positions possibles de l'arrière du véhicule impliquant le contact des deux coins arrière du véhicule avec les obstacles délimitant le côté et/ou l'arrière de ladite place, le deuxième lieu géométrique (LG2) décrivant la position dudit centre de rotation pour l'ensemble des positions possibles du véhicule de manière que l'un des coins avant soit en contact avec le coin opposé de l'obstacle délimitant l'avant de ladite place, de façon à déterminer la position optimale de l'arrière du véhicule en fonction de ladite position initiale du véhicule, la position optimale de l'arrière du véhicule étant obtenue lorsque le centre de rotation du véhicule passe par ledit point d'intersection (F) puis que le véhicule recule en suivant une consigne de braquage maximale.

2. Procédé selon la revendication 1, dans lequel la détermination de la trajectoire optimale comprend en outre :

> - une étape de simulation (24) de la trajectoire du véhicule pour sortir de ladite place à partir de ladite position arrière optimale jusqu'à la position initiale, l'étape de simulation comprenant deux sous-étapes, telles que pour chacune d'entre elles, le véhicule ait une orientation de braquage opposée, la première sous-étape (241) comprenant la simulation d'un premier déplacement du véhicule de la position arrière optimale jusqu'à une position intermédiaire lorsque le véhicule est à une distance donnée de l'obstacle situé à l'avant de ladite place, et la deuxième sous-étape (242) comprenant la simulation d'un deuxième déplacement du véhicule de ladite position intermédiaire jusqu'à la position initiale dudit véhicule, l'angle de lacet de véhicule (θ), associé à un repère fixe, s'annulant progressivement,
> - une étape (25) où on calcule la trajectoire optimale de parcage (Cpar) en inversant la trajectoire simulée (Cparsim).

3. Procédé selon la revendication précédente, dans lequel la deuxième sous-étape comprend en outre une étape d'optimisation de la trajectoire entre la position intermédiaire et la position initiale, où on génère des séries de valeurs d'angle volant pour permettre le suivi de la trajectoire optimale, et où on sélectionne (2422) la série de valeurs optimale permettant d'obtenir une trajectoire de parcage similaire, à une erreur près, à la trajectoire optimale.

4. Procédé selon la revendication précédente, dans lequel la trajectoire du véhicule est obtenue à partir de l'angle volant, à l'aide d'une variable donnée.

5. Procédé selon la revendication précédente, dans lequel ladite variable est la distance $\|\Delta\|+\|\Delta y\|+\|\Delta\theta\|$ où x et y sont respectivement l'abscisse et l'ordonnée du centre de la voiture, et θ l'angle de lacet du véhicule automobile dans un repère orthonormal ayant pour centre, le centre de l'essieu arrière dudit véhicule, l'angle de lacet étant fonction de l'angle volant.

6. Dispositif d'aide au parcage en temps réel pour véhicule automobile à partir d'une position initiale du véhicule et dans une place, comprenant un ensemble de capteurs (31, 32, 33) aptes à mesurer et évaluer ladite place et les obstacles environnants, où il comprend un moyen d'élaboration (30) apte à élaborer une consigne (Cpar) continue d'angle volant à délivrer au conducteur, ladite consigne permettant le suivi d'une trajectoire optimale de parcage par le véhicule **caractérisé par le fait qu'**il comprend des premiers moyens (34) de détermination de ladite trajectoire optimale aptes à déterminer un premier (LG1) et un deuxième (LG2) lieux géométriques du centre de rotation du véhicule, le premier lieu géométrique décrivant la position dudit centre de rotation pour l'ensemble des positions possibles de l'arrière du véhicule impliquant le contact des deux coins arrière du véhicule avec les obstacles délimitant le côté et/ou l'arrière de ladite place, le deuxième lieu géométrique décrivant la position dudit centre de rotation pour l'ensemble des positions possibles du véhicule, de manière que l'un des coins avant soit en contact avec le coin opposé de l'obstacle délimitant l'avant de ladite place, et des deuxièmes moyens de détermination (38) aptes à déterminer le point d'intersection (F) du premier et du deuxième lieux géométriques de façon à obtenir la position arrière optimale en fonction de ladite position initiale du véhicule.

7. Dispositif selon la revendication précédente, dans lequel le moyen d'élaboration de la consigne comprend en outre :

> - un moyen de simulation (40) de la trajectoire du véhicule pour sortir de ladite place à partir de ladite position arrière optimale jusqu'à la position initiale, ledit moyen de simulation comprenant deux sous-moyens, le premier sous-moyen (42) étant apte à simuler un premier déplacement du véhicule de la position arrière optimale en braquant le volant avec une première orientation jusqu'à une position intermédiaire lorsque le véhicule est à une distance donnée de l'obstacle situé à l'avant de ladite place, et le deuxième sous-moyen (43) étant apte à simuler un deuxième déplacement du véhicule de ladite position intermédiaire jusqu'à la position initiale, tel que l'angle de lacet (θ), associé à un repère fixe, s'annule progressivement,
> - un moyen d'inversion (48) apte à déterminer la trajectoire optimale de parcage (Cpar) en inversant la trajectoire simulée (Cparsim).

8. Dispositif selon la revendication précédente, dans lequel le deuxième sous-moyen (43) comprend un moyen d'optimisation (44) de la trajectoire du deuxième déplacement, apte à générer des séries de valeurs d'angle volant pour permettre le suivi de la trajectoire optimale, et un moyen de sélection (45) apte à sélectionner la série de valeurs optimale permettant d'obtenir une trajectoire de parcage similaire, à une erreur près, à la trajectoire optimale.

9. Dispositif selon la revendication précédente, dans lequel la trajectoire du véhicule est obtenue à partir de l'angle volant à l'aide d'une variable donnée.

10. Dispositif selon la revendication précédente, dans lequel ladite variable est la distance $|\Delta x\| + |\Delta y\| + |\Delta\theta\|$, où x et y sont respectivement l'abscisse et l'ordonnée du centre de la voiture, et θ l'angle de lacet du véhicule automobile dans un repère orthonormal ayant pour centre, le centre de l'essieu arrière dudit véhicule, l'angle de lacet étant fonction de l'angle volant.

11. Utilisation du dispositif selon l'une quelconque des revendications 6 à 10, au sein d'un système d'aide au parcage d'un véhicule automobile.

**Claims**

1. Method for real-time parking assistance for a motor vehicle starting from an initial position of the vehicle and into a space, comprising a preliminary step (20) of recognizing the space and the surrounding obstacles, where the method comprises the formulation of a continuous setpoint (Cpar) of steering wheel angle delivered to the driver, said setpoint making it possible for the vehicle to follow an optimal parking trajectory, **characterized in that** the determination of said optimal trajectory comprises the determination of a point of intersection (F) of a first (LG1) and of a second geometric loci (LG2) of the center of rotation of the vehicle, the first geometric locus (LG1) describing the position of said center of rotation for the set of possible positions of the rear of the vehicle involving contact of the two rear corners of the vehicle with the obstacles delimiting the side and/or the rear of said space, the second geometric locus (LG2) describing the position of said center of rotation for the set of possible positions of the vehicle in such a manner that one of the front corners is in contact with the opposite corner of the obstacle delimiting the front of said space, so as to determine the optimal position of the rear of the vehicle as a function of said initial position of the vehicle, the optimal position of the rear of the vehicle being obtained when the center of rotation of the vehicle passes through said point of intersection (F) then when the vehicle reverses while following a maximum deflection setpoint.

2. Method according to Claim 1, in which the determination of the optimal trajectory furthermore comprises:

- a step (24) of simulating the trajectory of the vehicle so as to exit said space from said optimal rear position up to the initial position, the simulation step comprising two sub-steps, such that for each of them, the vehicle has an opposite deflection orientation, the first sub-step (241) comprising the simulation of a first displacement of the vehicle from the optimal rear position to an intermediate position when the vehicle is a given distance from the obstacle situated at the front of said space, and the second sub-step (242) comprising the simulation of a second displacement of the vehicle from said intermediate position to the initial position of said vehicle, the vehicle yaw angle (θ), associated with a fixed reference frame, vanishing progressively,
- a step (25) wherein the optimal parking trajectory (Cpar) is calculated by inverting the simulated trajectory (Cparsim).

3. Method according to the preceding claim, in which the second sub-step furthermore comprises a step of optimizing the trajectory between the intermediate position and the initial position, wherein series of values of steering wheel angle are generated so as to make it possible to follow the optimal trajectory, and wherein the optimal series of values making it possible to obtain a parking trajectory similar, to within an error, to the optimal trajectory is selected (2422).

4. Method according to the preceding claim, in which the trajectory of the vehicle is obtained on the basis of the steering wheel angle, with the assistance of a given variable.

5. Method according to the preceding claim, in which said variable is the distance $\|\Delta x\| + \|\Delta y\| + \|\Delta\theta\|$, where x and y are respectively the abscissa and the ordinate of the center of the car, and θ the angle of yaw of the motor vehicle in an orthonormal reference frame whose center is the center of the rear axle of said vehicle, the angle of yaw being dependent on the steering wheel angle.

6. Device for real-time parking assistance for a motor vehicle starting from an initial position of the vehicle and into a space, comprising a set of sensors (31, 32, 33) able to measure and evaluate said space and the surrounding obstacles, where it comprises a formulation means (30) able to formulate a continuous setpoint (Cpar) of steering wheel angle to be delivered to the driver, said setpoint making it possible for the vehicle to follow an optimal parking trajectory, **characterized in that** it comprises first means (34) for determining said optimal trajectory able to determine a first (LG1) and a second (LG2) geometric loci of the center of rotation of the vehicle, the first geometric locus describing the position of said center of rotation for the set of possible positions of the rear of the vehicle involving contact of the two rear corners of the vehicle with the obstacles delimiting the side and/or the rear of said space, the second geometric locus describing the position of said center of rotation for the set of possible positions of the vehicle, in such a manner that one of the front corners is in contact with the opposite corner of the obstacle delimiting the front of said space, and second determination means (38) able to determine the point of intersection (F) of the first and of the second geometric loci so as to obtain the optimal rear position as a function of said initial position of the vehicle.

7. Device according to the preceding claim, in which the means for formulating the setpoint furthermore comprises:

  - a means (40) for simulating the trajectory of the vehicle so as to exit said space from said optimal rear position up to the initial position, said simulation means comprising two submeans, the first submeans (42) being able to simulate a first displacement of the vehicle from the optimal rear position by deflecting the steering wheel with a first orientation up to an intermediate position when the vehicle is a given distance from the obstacle situated at the front of said space, and the second submeans (43) being able to simulate a second displacement of the vehicle from said intermediate position to the initial position, such that the angle of yaw (θ), associated with a fixed reference frame, vanishes progressively,
  - an inverting means (48) able to determine the optimal parking trajectory (Cpar) by inverting the simulated trajectory (Cparsim).

8. Device according to the preceding claim, in which the second submeans (43) comprises a means (44) for optimizing the trajectory of the second displacement, able to generate series of values of steering wheel angle so as to make it possible to follow the optimal trajectory, and a selection means (45) able to select the optimal series of values making it possible to obtain a parking trajectory similar, to within an error, to the optimal trajectory.

9. Device according to the preceding claim, in which the trajectory of the vehicle is obtained on the basis of the steering wheel angle with the assistance of a given variable.

10. Device according to the preceding claim, in which said variable is the distance $\|\Delta x\| + \|\Delta y\| + \|\Delta\theta\|$ where x and y are respectively the abscissa and the ordinate of the center of the car, and θ the angle of yaw of the motor vehicle in an orthonormal reference frame whose center is the center of the rear axle of said vehicle, the angle of yaw being dependent on the steering wheel angle.

11. Use of the device according to any one of Claims 6 to 10, within a system for assisting the parking of a motor vehicle.

**Patentansprüche**

1. Verfahren zur Echtzeit-Einparkhilfe für ein Kraftfahrzeug ausgehend von einer Ausgangsposition des Fahrzeugs und in einen Stellplatz, das einen vorhergehenden Schritt (20) der Erkennung des Stellplatzes und der umgebenden Hindernisse aufweist, wobei das Verfahren die Erarbeitung eines durchgehenden Sollwerts (Cpar) des an den Fahrer gelieferten Lenkradwinkels aufweist, wobei der Sollwert die Verfolgung einer optimalen Einpark-Fahrspur durch das Fahrzeug ermöglicht, **dadurch gekennzeichnet, dass** die Bestimmung der optimalen Fahrspur die Bestimmung eines Schnittpunkts (F) einer ersten (LG1) und einer zweiten Ortslinie (LG2) des Drehpunkts des Fahrzeugs aufweist, wobei die erste Ortslinie (LG1) die Position des Drehpunkts für die Gesamtheit der möglichen Positionen des Hecks des Fahrzeugs beschreibt, die den Kontakt der zwei hinteren Eckbereiche des Fahrzeugs mit den die Seite und/oder die Rückseite des Stellplatzes begrenzenden Hindernissen implizieren, während die zweite Ortslinie (LG2) die Position des Drehpunkts für die Gesamtheit der möglichen Positionen des Fahrzeugs beschreibt, derart, dass einer der vorderen Eckbereiche mit dem entgegengesetzten Eckbereich des Hindernisses in Kontakt ist, das die Vorderseite des Stellplatzes begrenzt, um die optimale Position des Hecks des Fahrzeugs in Abhängigkeit von der Ausgangsposition des Fahrzeugs zu bestimmen, wobei die optimale Position des Hecks des Fahrzeugs erhalten wird, wenn der Drehpunkt des Fahrzeugs durch den Schnittpunkt (F) geht und dann das Fahrzeug zurücksetzt, indem es einem maximalen Einschlagsollwert folgt.

2. Verfahren nach Anspruch 1, bei dem die Bestimmung der optimalen Fahrspur außerdem aufweist:

  - einen Simulationsschritt (24) der Fahrspur des Fahrzeugs, um ausgehend von der optimalen hinteren Position bis in die Ausgangsposition aus dem Stellplatz zu fahren, wobei der Simulationsschritt zwei derartige Teilschritte aufweist, dass das Fahrzeug für jeden von ihnen eine entgegengesetzte Einschlagausrichtung hat, wobei der erste Teilschritt (241) die Simulation einer ersten Bewegung des Fahrzeugs von der optimalen hinteren Position bis in eine Zwischenposition aufweist, wenn das Fahrzeug sich in einem gegebenen Abstand von dem vor dem Stellplatz befindlichen Hindernis befindet, und der zweite Teilschritt (242) die Simulation einer zweiten Bewegung des Fahrzeugs aus der Zwischenposition bis in die Ausgangsposition des Fahrzeugs aufweist, wobei der Fahrzeuggierwinkel ($\theta$), der einem ortsfesten Bezugspunkt zugeordnet ist, progressiv zu Null wird, - einen Schritt (25), in dem die optimale Einpark-Fahrspur (Cpar) berechnet wird, indem die simulierte Fahrspur (Cparsim) umgekehrt wird.

3. Verfahren nach dem vorhergehenden Anspruch, bei dem der zweite Teilschritt außerdem einen Schritt der Optimierung der Fahrspur zwischen der Zwischenposition und der Ausgangsposition aufweist, in welchem Reihen von Lenkradwinkelwerten erzeugt werden, um die Verfolgung der optimalen Fahrspur zu ermöglichen, und in welchem die optimale Wertereihe ausgewählt wird (2422), die es ermöglicht, eine Einpark-Fahrspur zu erhalten, die bis auf einen Fehler der optimalen Fahrspur gleich ist.

4. Verfahren nach dem vorhergehenden Anspruch, bei dem die Fahrspur des Fahrzeugs ausgehend vom Lenkradwinkel mit Hilfe einer gegebenen Variablen erhalten wird.

5. Verfahren nach dem vorhergehenden Anspruch, bei dem die Variable der Abstand $\|\Delta x\|+\|\Delta y\|+\|\Delta\theta\|$ ist, wobei x und y die Abszisse bzw. die Ordinate der Mitte des Fahrzeugs sind und $\theta$ der Gierwinkel des Kraftfahrzeugs in einem orthonormierten Koordinatensystem ist, das als Mitte die Mitte der Hinterachse des Fahrzeugs hat, wobei der Gierwinkel vom Lenkradwinkel abhängt.

6. Echtzeit-Einparkhilfevorrichtung für ein Kraftfahrzeug ausgehend on einer Ausgangsposition des Fahrzeugs und in einen Stellplatz, die eine Gruppe von Sensoren (31, 32, 33) aufweist, die fähig sind, den Stellplatz und die umgebenden Hindernisse zu messen und zu bewerten, wobei sie eine Erarbeitungseinrichtung (30) aufweist, die fähig ist, einen an den Fahrer zu liefernden durchgehenden Lenkradwinkel-Sollwert (Cpar) zu erarbeiten, wobei der Sollwert die Verfolgung einer optimalen Einpark-Fahrspur durch das Fahrzeug ermöglicht, **dadurch gekennzeichnet, dass** sie erste Bestimmungseinrichtungen (34) zur Bestimmung der optimalen Fahrspur, die fähig sind, eine erste (LG1) und eine zweite Ortslinie (LG2) des Drehpunkts des Fahrzeugs zu bestimmen, wobei die erste Ortslinie die Position des Drehpunkts für die Gesamtheit der möglichen Positionen des Hecks des Fahrzeugs beschreibt, die den Kontakt der zwei Eckbereiche des Fahrzeugs mit den die Seite und/oder die Rückseite des Stellplatzes begrenzenden Hindernissen implizieren, wobei die zweite Ortslinie die Position des Drehpunkts für die Gesamtheit der möglichen Positionen des Fahrzeugs beschreibt, derart, dass einer der vorderen Eckbereiche mit dem entgegengesetzten Eckbereich des die Vorderseite des Stellplatzes begrenzenden Hindernisses in Kontakt ist, und zweite Bestimmungseinrichtungen (38) aufweist, die fähig sind, den Schnittpunkt (F) der ersten und der zweiten Ortslinie zu bestimmen, um die optimale hintere Position in Abhängigkeit von der Ausgangsposition des Fahrzeugs zu erhalten.

7. Vorrichtung nach dem vorhergehenden Anspruch, bei der die Einrichtung zur Erarbeitung des Sollwerts außerdem aufweist:

- eine Simulationseinrichtung (40) der Fahrspur des Fahrzeugs, um ausgehend von der optimalen hinteren Position bis zur Ausgangsposition aus dem Stellplatz heraus zu fahren, wobei die Simulationseinrichtung zwei Teileinrichtungen aufweist, wobei die erste Teileinrichtung (42) fähig ist, eine erste Bewegung des Fahrzeugs von der optimalen hinteren Position, indem das Lenkrad mit einer ersten Ausrichtung eingeschlagen wird, bis in eine Zwischenposition zu simulieren, wenn das Fahrzeug in einem gegebenen Abstand von dem Hindernis ist, das sich vor dem Stellplatz befindet, und die zweite Teileinrichtung (43) fähig ist, eine zweite Bewegung des Fahrzeugs aus der Zwischenposition bis in die Ausgangsposition zu simulieren, derart, dass der einem festen Bezugspunkt zugeordnete Gierwinkel ($\theta$) progressiv zu Null wird, - eine Umkehreinrichtung (48), die fähig ist, die optimale Einpark-Fahrspur (Cpar) zu bestimmen, indem sie die simulierte Fahrspur (Cparsim) umkehrt.

8. Vorrichtung nach dem vorhergehenden Anspruch, bei der die zweite Teileinrichtung (43) eine Optimierungseinrichtung (44) der Fahrspur der zweiten Bewegung, die fähig ist, Reihen von Lenkradwinkelwerten zu erzeugen, um die Verfolgung der optimalen Fahrspur zu ermöglichen, und eine Auswahleinrichtung (45) aufweist, die fähig ist, die optimale Wertereihe auszuwählen, die es ermöglicht, eine bis auf einen Fehler der optimalen Fahrspur gleiche Einpark-Fahrspur zu erhalten.

9. Vorrichtung nach dem vorhergehenden Anspruch, bei der die Fahrspur des Fahrzeugs ausgehend vom Lenkradwinkel mit Hilfe einer gegebenen Variablen erhalten wird.

10. Vorrichtung nach dem vorhergehenden Anspruch, bei der die Variable der Abstand $\|\Delta x\|+\|\Delta y\|+\|\Delta\theta\|$ ist,

wobei x und y die Abszisse bzw. die Ordinate der Mitte des Fahrzeugs sind und θ der Gierwinkel des Kraftfahrzeugs in einem orthonormierten Koordinatenkreuz ist, das als Mitte die Mitte der Hinterachse des Fahrzeugs hat, wobei der Gierwinkel vom Lenkradwinkel abhängt.

11. Verwendung der Vorrichtung nach einem der Ansprüche 6 bis 10 in einem Einparkhilfesystem eines Kraftfahrzeugs.

# FIG.1

EP 1 910 154 B1

FIG.2

EP 1 910 154 B1

# FIG.3

# FIG.4

EP 1 910 154 B1

LG1

11

1

8

9

CV

10

CR

# FIG.5

EP 1 910 154 B1

# FIG.6

F

241

242

Cparsim

# FIG.8

2421

2422

Cparsim

# FIG.7

EP 1 910 154 B1

# FIG.9

# FIG.10

EP 1 910 154 B1

RÉFÉRENCES CITÉES DANS LA DESCRIPTION

**Documents brevets cités dans la description**

- EP 1170171 A
- FR 2785383
- US 20010030688 A
- FR 2630075
- EP 1361458 A